# EUROPEAN PATENT APPLICATION

(11) **EP 4 545 182 A1**
(43) Date of publication of application: **30.04.2025**
(21) Application number: 24205715.6
(22) Date of filing: 10.10.2024
(51) Int. Cl.: B01L 9/00, G01N 35/02, B01L 3/00

(54) **SAMPLE CONTAINER HOLDING DEVICE**

(30) Priority: 27.10.2023 JP 2023184943
(71) Applicant: Yokogawa Electric Corporation, Tokyo 180-8750 (JP)
(72) Inventor: IMAI, Yuya, Tokyo, 180-8750 (JP); HARAMI, Satoru, Tokyo, 180-8750 (JP)
(74) Representative: Stöckeler, Ferdinand

(57) **Abstract**

The sample container holding device holds a sample container in a rectangular shape with a first side surface, a first corner, a second side surface, a second corner, a third side surface, a third corner, a fourth side surface, and a fourth corner clockwise in this order in the top view. The sample container holding device includes a first regulator that regulates the position in the first horizontal direction and the rotational position in the first side surface, a second regulator that regulates the position in the second horizontal direction and the rotational position in the second side surface, a first press that presses the first side surface against the first regulator by pushing the third side surface, and a second press that presses the second side surface against the second regulator by pushing the fourth side surface.

## Description

### TECHNICAL FIELD

The present disclosure relates to a sample container holding device.

### BACKGROUND

Sample container holding devices that hold sample containers are known. See, for example, Patent Literatures (PTLs) 1 to 5.

### CITATION LIST

### Patent Literatures

PTL 1: JP 6050546 B2
PTL 2: JP 2015-99256 A
PTL 3: JP 2009-192763 A
PTL 4: JP 2006-98286 A
PTL 5: JP 2011-180411 A

### SUMMARY

It would be helpful to provide a sample container holding device that can stably achieve positioning that determines positions in first and second horizontal directions and a rotational position in the top view.

One aspect of the present disclosure is as follows.
[1]
   A sample container holding device configured to hold a sample container in a rectangular shape with a first side surface, a first corner, a second side surface, a second corner, a third side surface, a third corner, a fourth side surface, and a fourth corner clockwise in this order in top view, the sample container holding device including:
   a mount on which the sample container is placed;
   a first regulator configured to regulate, by contact with the first side surface, a position in a first horizontal direction and a rotational position in the top view in the first side surface;
   a second regulator configured to regulate, by contact with the second side surface, a position in a second horizontal direction and the rotational position in the top view in the second side surface, the second horizontal direction being orthogonal to the first horizontal direction;
   a first press configured to press the first side surface against the first regulator by pushing the third side surface; and
   a second press configured to press the second side surface against the second regulator by pushing the fourth side surface.
[2]
   The sample container holding device according to [1], wherein each of the first and second presses is configured with a linear motion device.
[3]
   The sample container holding device according to [1] or [2], wherein
   the first press is located between both ends of the first regulator in the second horizontal direction, and
   the second press is located between both ends of the second regulator in the first horizontal direction.
[4]
   The sample container holding device according to any one of [1] to [3], wherein
   the first regulator includes a reference plane that contacts the first side surface along the second horizontal direction, and
   the second regulator includes a reference plane that contacts the second side surface along the first horizontal direction.
[5]
   The sample container holding device according to any one of [1] to [4], wherein the mount is configured with a shelf that is located at each of four corners of an opening that is open downward.
[6]
   A sample analysis device including the sample container holding device according to any one of [1] to [5].
[7]
   The sample analysis device according to [6], including a mover configured to move the sample container holding device that holds the sample container.
[8]
   The sample analysis device according to [7], including an analyzer configured to analyze a sample contained in the sample container by moving, by the mover, the sample container holding device that holds the sample container.

According to the present disclosure, it is possible to provide the sample container holding device that can stably achieve positioning that determines the positions in the first and second horizontal directions and the rotational position in the top view.

### BRIEF DESCRIPTION OF THE DRAWINGS

In the accompanying drawings:
FIG. 1 is a top view of a sample container holding device according to an embodiment of the present disclosure;
FIG. 2 is an A-A cross-sectional view of FIG. 1;
FIG. 3 is a top view illustrating a state in which the sample container holding device illustrated in FIG. 1 holds a sample container;
FIG. 4 is a B-B cross-sectional view of FIG. 3;
FIG. 5 is a top view illustrating a state in which a sample container holding device according to a comparative example improperly holds the sample container; and
FIG. 6 is a block diagram of a sample analysis device with the sample container holding device illustrated in FIG. 1.

### DETAILED DESCRIPTION

An embodiment of the present disclosure will be exemplarily described below in detail with reference to the drawings.

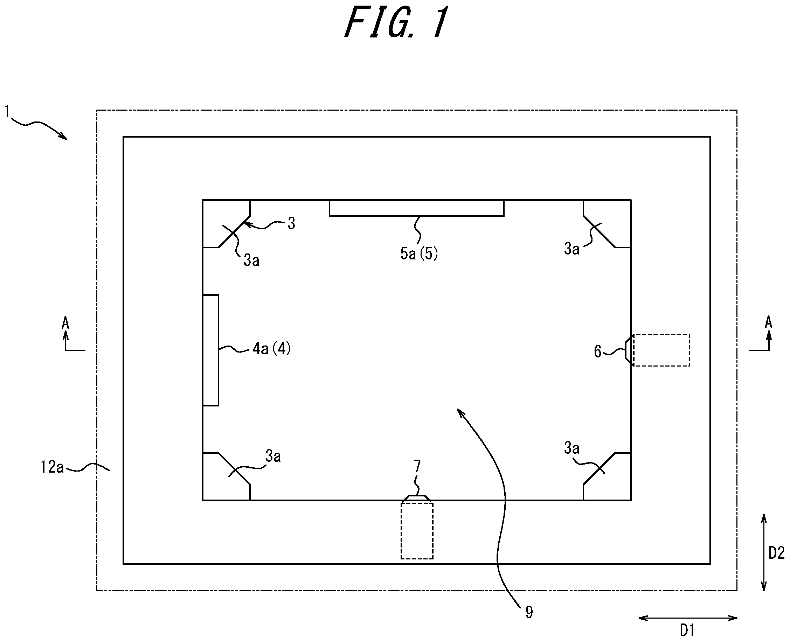

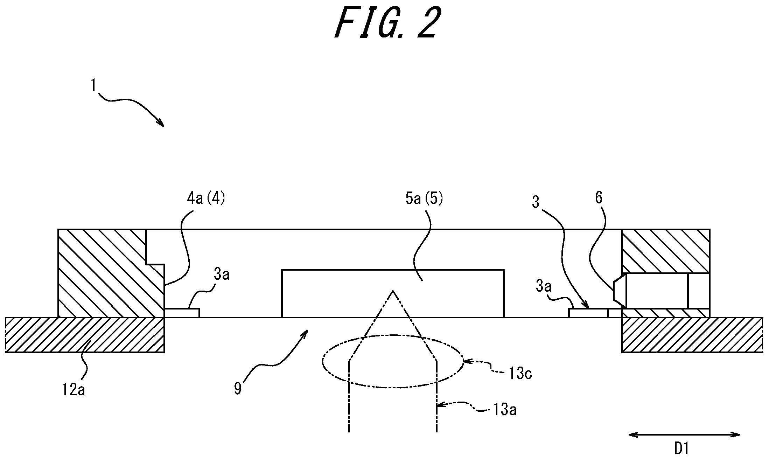

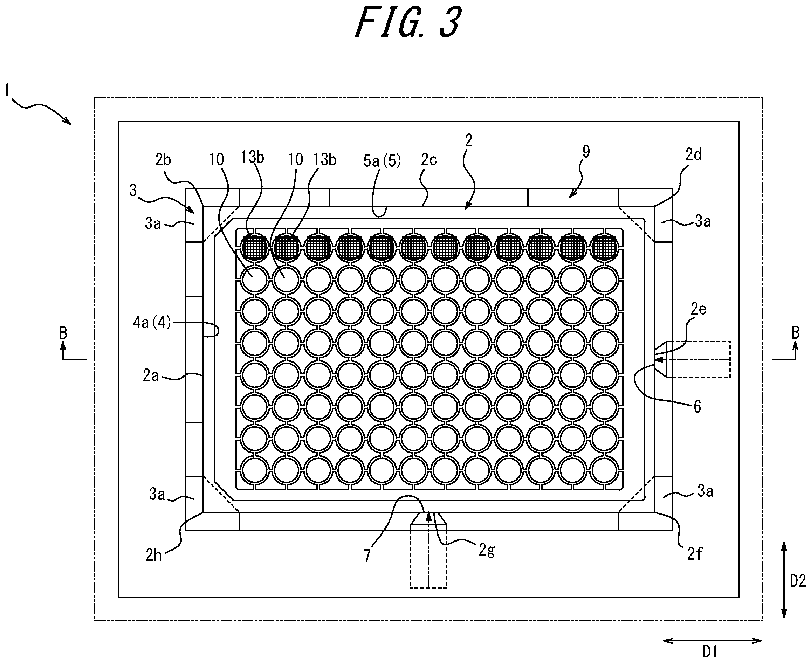

As illustrated in FIGS. 1 to 4, a sample container holding device 1 according to the embodiment of the present disclosure is configured to hold a sample container 2 in a rectangular shape (see FIG. 3) with a first side surface 2a, a first corner 2b, a second side surface 2c, a second corner 2d, a third side surface 2e, a third corner 2f, a fourth side surface 2g, and a fourth corner 2h clockwise in this order in the top view. The sample container holding device 1 includes a mount 3 on which the sample container 2 is placed, a first regulator 4 that regulates, by contact with the first side surface 2a, a position in a first horizontal direction D1 and a rotational position in the top view in the first side surface 2a, a second regulator 5 that regulates, by contact with the second side surface 2c, a position in a second horizontal direction D2, which is orthogonal to the first horizontal direction D1, and the rotational position in the top view in the second side surface 2c, a first press 6 that presses the first side surface 2a against the first regulator 4 by pushing the third side surface 2e, and a second press 7 that presses the second side surface 2c against the second regulator 5 by pushing the fourth side surface 2g.

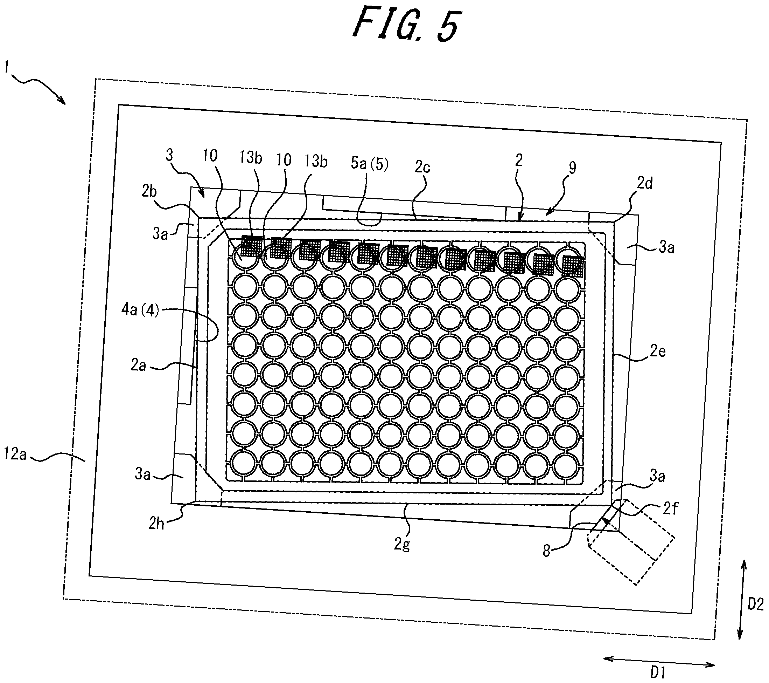

According to the above configuration, pressing the first side surface 2a against the first regulator 4, by pushing the third side surface 2e by the first press 6, allows regulating the position in the first horizontal direction D1 and the rotational position in the top view in the first side surface 2a. Pressing the second side surface 2c against the second regulator 5, by pushing the fourth side surface 2g by the second press 7, allows regulating the position in the second horizontal direction D2 and the rotational position in the top view in the second side surface 2c. Therefore, when the positional regulation by the first press 6 is performed first, the press by the second press 7 is performed while the positional regulation by the first press 6 is performed, so the sample container 2 is less likely to be inclined when being pressed by the second press 7, which stably achieves positioning that determines the positions in the first horizontal direction D1 and the second horizontal direction D2 and the rotational position in the top view. When the positional regulation by the second press 7 is performed first, the press by the first press 6 is performed while the positional regulation by the second press 7 is performed, so the sample container 2 is less likely to be inclined when being pressed by the first press 6, which stably achieves positioning also in this case. Also in a case in which the positional regulation by the first press 6 and the positional regulation by the second press 7 are performed at the same time, positioning can be stably achieved. In contrast, as in a comparative example illustrated in FIG. 5, the above effect may not be obtained in a configuration in which, although the sample container holding device 1 has the first regulator 4 and the second regulator 5, the sample container holding device 1 has a corner press 8 that presses the first side surface 2a and the second side surface 2c against the first regulator 4 and the second regulator 5 by pushing the third corner 2f, instead of the first press 6, which presses the first side surface 2a against the first regulator 4 by pushing the third side surface 2e, and the second press 7, which presses the second side surface 2c against the second regulator 5 by pushing the fourth side surface 2g. The sample container 2 may be held in an inclined state, as illustrated in FIG. 5, and fail in positioning.

Each of the first press 6 and the second press 7 is configured with a linear motion device. According to the above configuration, the stability of positioning can be improved. The linear motion device may be constituted of, for example, a fluid pressure actuator using fluid pressure of air or the like, or an electric actuator using electricity. An operating direction (pressing direction) of the linear motion device that constitutes the first press 6 is preferably in parallel with the first horizontal direction D1, but is not limited to this. An operating direction (pressing direction) of the linear motion device that constitutes the second press 7 is preferably in parallel with the second horizontal direction D2, but is not limited to this.

The first press 6 is located between both ends of the first regulator 4 in the second horizontal direction D2. The second press 7 is located between both ends of the second regulator 5 in the first horizontal direction D1. According to the above configuration, the rotational position of the first side surface 2a can be easily regulated when the first press 6 presses the first side surface 2a against the first regulator 4, and the rotational position of the second side surface 2c can be easily regulated when the second press 7 presses the second side surface 2c against the second regulator 5, thus improving the stability of positioning.

The first regulator 4 has a reference plane 4a that contacts the first side surface 2a along the second horizontal direction D2. The second regulator 5 has a reference plane 5a that contacts the second side surface 2c along the first horizontal direction D1. According to the above configuration, the reference planes 4a and 5a facilitate regulating the rotational position, thus improving the stability of positioning.

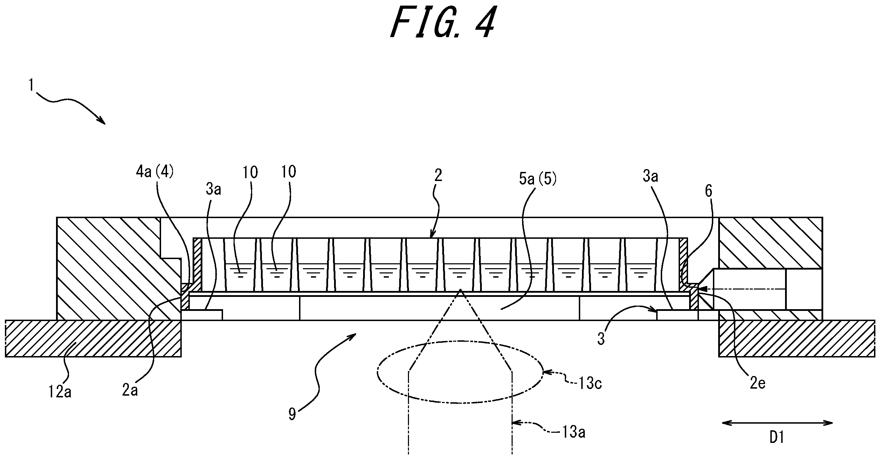

The mount 3 is configured with a shelf 3a that is located at each of four corners of an opening 9 that is open downward. According to the above configuration, it is possible to favorably analyze samples 10, which are contained in the sample container 2 held by the sample container holding device 1, using an optical system 13a (see FIG. 4) through the opening 9.

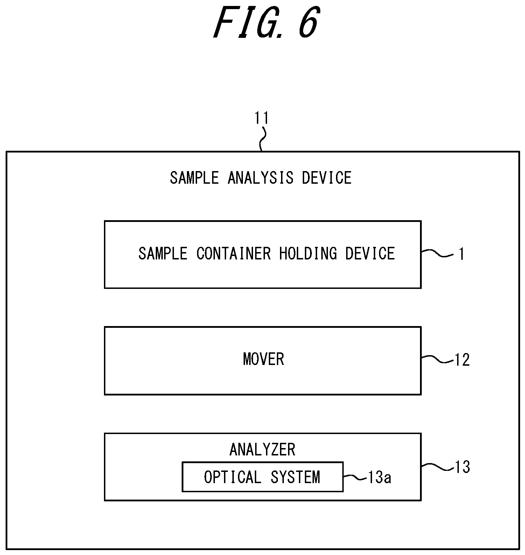

As illustrated in FIG. 6, a sample analysis device 11 according to the present embodiment includes the sample container holding device 1. According to the above configuration, the stable positioning by the sample container holding device 1 can reduce noise during analysis of the samples 10, thus improving the accuracy of output. In addition, the stable positioning by the sample container holding device 1 can reduce the size of an analysis/observation area, thus improving the speed of output. The sample analysis device 11 can be suitably used, for example, as a drug discovery support device.

The sample analysis device 11 includes a mover 12 that moves the sample container holding device 1 that holds the sample container 2. According to the above configuration, accurate movement by stable positioning can be achieved in the sample analysis device 11.

The sample analysis device 11 includes an analyzer 13 that analyzes the samples 10 contained in the sample container 2 by moving, by the mover 12, the sample container holding device 1 that holds the sample container 2. According to the above configuration, due to stable positioning, accurate analysis using the mover 12 and the analyzer 13 can be achieved. In addition to movement of the sample container 2 during analysis in the analyzer 13, the mover 12 may be configured to move the sample container holding device 1 that holds the sample container 2, in order to carry the sample container 2 to the analyzer 13. The mover 12 may also be configured to, without moving the sample container 2 during analysis in the analyzer 13, move the sample container holding device 1 that holds the sample container 2, in order to carry the sample container 2 to the analyzer 13.

The mover 12 has a moving stage 12a that can move the sample container holding device 1, which holds the sample container 2, in parallel to the first horizontal direction D1, and the sample container holding device 1, which holds the sample container 2, in parallel to the second horizontal direction D2. According to the above configuration, the sample container holding device 1 during analysis in the analyzer 13 can be accurately moved in the horizontal directions by the moving stage 12a.

The mount 3 is configured with the shelf 3a that is located at each of the four corners of the opening 9 that is open downward. The analyzer 13 has the optical system 13a that performs detection through the opening 9 for the samples 10 contained in the sample container 2 held by the sample container holding device 1. According to the above configuration, the samples 10 can be analyzed favorably. In particular, during analysis in the analyzer 13, due to accurate movement of the sample container 2 by the mover 12 based on stable positioning, detection fields of view 13b by the optical system 13a can be stably aligned to proper positions in the sample container 2, as illustrated in FIG. 3 with the detection fields of view 13b superimposed on the sample container 2. In contrast, in the comparative example illustrated in FIG. 5, the detection fields of view 13b are easily misaligned as illustrated in the drawing.

The optical system 13a has a microscope 13c. According to the above configuration, the microscope 13c enables analysis with high accuracy. In this case, the mover 12 can be configured to move the sample container holding device 1 on the order of micrometers during analysis by the microscope 13c.

The samples 10 are, for example, cells, tissue, or the like. The sample container 2 is a microplate, but is not limited to this. The microplate is not particularly limited, but preferably has external dimensions recommended in the SBS standard. The optical system 13a may be configured to apply light (e.g., excitation light) to the samples 10 and detect light (e.g., light emitted by the samples 10 excited by the excitation light) from the samples 10. The sample analysis device 11 may be configured with a processing unit (computer) that generates images based on the detection results by the optical system 13a. The mover 12 moves the sample container holding device 1 while keeping the sample container 2 in a horizontal posture, but is not limited to this. The sample analysis device 11 may be configured with a robot arm that places the sample container 2 on the sample container holding device 1, or may be configured that the sample container 2 is placed on the sample container holding device 1 by a person.

Although the embodiment of the present disclosure has been described above, the present disclosure is not limited to the aforementioned embodiment. The aforementioned embodiment can be modified in various ways without departing from the gist of the present disclosure.

## Claims

1. A sample container holding device configured to hold a sample container in a rectangular shape with a first side surface, a first corner, a second side surface, a second corner, a third side surface, a third corner, a fourth side surface, and a fourth corner clockwise in this order in top view, the sample container holding device comprising:
a mount on which the sample container is placed;
a first regulator configured to regulate, by contact with the first side surface, a position in a first horizontal direction and a rotational position in the top view in the first side surface;
a second regulator configured to regulate, by contact with the second side surface, a position in a second horizontal direction and the rotational position in the top view in the second side surface, the second horizontal direction being orthogonal to the first horizontal direction;
a first press configured to press the first side surface against the first regulator by pushing the third side surface; and
a second press configured to press the second side surface against the second regulator by pushing the fourth side surface.

2. The sample container holding device according to claim 1, wherein each of the first and second presses is configured with a linear motion device.

3. The sample container holding device according to claim 1, wherein
the first press is located between both ends of the first regulator in the second horizontal direction, and
the second press is located between both ends of the second regulator in the first horizontal direction.

4. The sample container holding device according to claim 1, wherein
the first regulator comprises a reference plane that contacts the first side surface along the second horizontal direction, and
the second regulator comprises a reference plane that contacts the second side surface along the first horizontal direction.

5. The sample container holding device according to claim 1, wherein the mount is configured with a shelf that is located at each of four corners of an opening that is open downward.

6. A sample analysis device comprising the sample container holding device according to claim 1.

7. The sample analysis device according to claim 6, comprising a mover configured to move the sample container holding device that holds the sample container.

8. The sample analysis device according to claim 7, comprising an analyzer configured to analyze a sample contained in the sample container by moving, by the mover, the sample container holding device that holds the sample container.
